# EUROPEAN PATENT SPECIFICATION

(11) **EP 2 958 299 B1**
(45) Date of publication and mention of the grant of the patent: **30.11.2016**
(21) Application number: 14172661.2
(22) Date of filing: 17.06.2014
(51) Int. Cl.: H04L 29/08, G06Q 30/02

(54) **Method for online detection of web adresses intentionally requested by a user in a stream of web content requests**
Verfahren zur Online-Erkennung von Webadressen in einem Strom von Webinhaltsanforderungen, die beabsichtigt von einem Anwender in einem Strom angefragt werden
Procédé pour la détection en ligne d'adresse Web demandées intentionnellement par un utilisateur dans un flux de demandes de contenu Web

(43) Date of publication of application: 23.12.2015
(73) Proprietor: Alcatel Lucent, 92100 Boulogne-Billancourt (FR); INRIA - Institut National de Recherche en Informatique et en Automatique, 78153 Le Chesnay Cedex (FR)
(72) Inventor: Scavo, Giuseppe, 95024 ACIREALE (IT); Ben Houidi, Zied, 91620 NOZAY (FR); Cruz Teixeira, Renata, 75005 PARIS (FR)
(74) Representative: Camus, Olivier Jean-Claude

(56) References cited:
- EP-A1- 2 640 035
- BEN HOUIDI ZIED ET AL CRISTOFARO EMILIANO DE E DECRITSOFAROUPSILONCL AC UK UNIVERSITY COLLEGE LONDON DEPARTMENT OF COMPUTER SCIENC: "Gold Mining in a River of Internet Content Traffic", 14 April 2014 (2014-04-14), LECTURE NOTES IN COMPUTER SCIENCE (LNCS); [LECTURE NOTES IN COMPUTER SCIENCE], SPRINGER VERLAG, DE, PAGE(S) 91 - 103, XP047256095, ISSN: 0302-9743 ISBN: 978-3-540-37025-3 * the whole document *
- HYOUNG-KEE CHOI ET AL: "A behavioral model of web traffic", 19991031; 19991031 - 19991103, 31 October 1999 (1999-10-31), pages 327-334, XP010356987,

## Description

### FIELD OF THE INVENTION

The invention concerns a method to detect, online, web content requests corresponding to human intentional visits in a stream of web content requests containing both web content requests corresponding to humans' intentional visit and web content requests that are automatically requested by applications to render web pages.

### BACKGROUND

Web addresses, also called URLs (Uniform Resource Locator), enable to reference web contents: HTLM documents, images, sounds, advertisements, etc.

When a user clicks on a web address (URL) in a web browser, a request for the web content associated with the web address is generated by the web browser. This type of requests corresponds to human intentional visit and the web addresses contained in this type of requests are qualified of "intentionally requested". On the contrary, a stream of web content requests also comprises web content requests that are automatically generated by the web browser to render the web pages. The web addresses contained in this second type of requests are qualified of "automatically requested". Indeed, when the URL of a web page is requested by a user, a cascade of web content requests is generated by the web browser to render the web page. This second type of web content requests enables for example to render images in the web pages, scripts composing the web page...

Consequently, by observing a stream of web content requests, it is difficult to distinguish which web content requests correspond to humans' intentional visits and which one correspond to requests automatically requested by web browsers to render web pages.

However, in order to perform data analytics, media curation or web pages recommendation from the passive observation of web content requests, we need to distinguish in a stream of web content requests the intentionally generated requests from the automatically generated requests.

In the prior art, some detection methods have been proposed to tackle this problem.

To that purpose, the document "A behavioral model of web traffic", by H.-K. Choi and J.O. Limb, in IEEE ICNP, 1999 describes a "type based" method. This method comprises a step of monitoring the content responses of each web content requests to guess the type of content. If the content type is html, the request is considered as intentionally requested. Otherwise, it is considered as automatically requested. However, this method needs to monitor the web content requests and the corresponding responses in order to determine if the request are intentionally requested or not which poses privacy and performance issues. Besides, relying on the type alone is not reliable.

The document "Generating representative web workloads for network and server performance evaluation", by P. Barford and M. Crovella, in ACM SIGMETRICS, 1998 describes a "time based" method, comprising a step of monitoring the time between two web content requests. If the idle time between two web content requests is shorter than a given threshold, the web content requests are considered as automatically requested by the web browser. This is based on the idea that automatically requested requests are a burst of requests that come very shortly after a user has clicked on an URL. However, this method is not reliable nowadays since web browsers are multi-tab and users open multiple tabs in parallel. Consequently, nowadays, requests for different pages overlap and the time based method is not reliable anymore. Another inconvenience is that the threshold is difficult to set because multiple factors have to be taken into account, such as the speed of the network, the speed of the user device, the load of the web server, the DNS response time, etc. For example, the presence of an ajax script in a page can heavily change the time patterns of the request.

A third detection method of the prior art, called "stream-structure algorithm" is described in the document "Towards understanding modern web traffic", by S. Ihm and V.S. Pai, in ACM IMC, 2011. This method comprises a step of dividing the content requests stream into substreams by using the referral relationship between pages. By dividing the requests into substreams, the method reduces the temporal overlap between requests and is then able to more safely run the type based and the time based methods.

The document EP n°13 184 392.2 describes another method to detect the intentionally requested web content request in a stream of web content requests between a web server and a web browser, observed on a network, each web content request comprising a field referrer, said referrer representing a web address from which is issued the web content request, said method comprising a main step of: for each web content request of a subset of said stream, named considered request:
- performing a main test, which is:
   - negative if the referrer of the considered request is comprised in a list of web addresses
   - positive otherwise
- in case of a positive main test, adding the referrer to the list of web addresses.

Further prior-art is EP2640035.

However, none of the methods of the prior art may be applied online on a stream of web content requests since in all methods of the prior art, we need to make two passes on the data.

### SUMMARY OF THE INVENTION

The invention aims at overcoming the drawbacks of the methods of the prior art by providing a method of detecting the intentionally generated web content requests in a stream of web content requests, and that may be implemented online.

To that purpose, a first aspect of the invention concerns a method of online detection of intentionally requested web addresses in a stream of web content requests, each web content request containing a request field containing a requested web address and a referrer field, the method using a first cache named "complete cache" and a second cache named "candidate cache", the complete cache comprising complete items, each complete item comprising a complete identifier and a complete value, the candidate cache comprising candidate items, each candidate item comprising a candidate identifier and a candidate value, the method comprising the following steps:
- (a) detecting a new web content request in the stream;
- (b) creating a new complete item in the complete cache with a first set of data of the new web content request;
- (c) applying a preliminary test on the web content request,
- if the preliminary test has a positive result:
   ∘ (d) updating the candidate cache according to the data contained in the web content request;
   ∘ (e) checking if the candidate cache has candidate items older than a time threshold;
   ∘ (f) applying a detection test on the candidate items older than the time threshold, the detection test having a positive result if the candidate item is elected as intentionally requested;
   ∘ (g) retrieving from the complete cache data relative to the elected candidate items.

This method keeps two types of caches of the very recent past while reading the present. The first cache is a simple static buffer that is used to retrieve information relative to the candidate web addresses once elected. The second cache is an observation container that keeps track of the characteristics of candidate web addresses that are likely to be intentionally requested, based on recent past events. If before the expiration of an observation period, the gathered characteristics on a candidate web addresses stored in the candidate cache do not allow it to be elected as intentionally requested, the candidate web address is discarded. Otherwise, it is elected and all the necessary information relative to this elected web address are retrieved thanks to the first cache.

The method may also comprise one or several of the following technical features taken individually or according all possible technical combinations.

Advantageously, the method further comprises a step of suppressing the candidate items once the detection test has been applied on them. This step enables to regularly safely resize down the candidate cache and the observation period's metadata so that the memory usage of the method remains steady throughout the reading of the stream. It performs this resizing without losing valuable information about the candidate web addresses.

Advantageously, the step (d) of updating the candidate cache comprises the following steps:
- (d1) creating a new item with at least a second set of data of the new web content request, the new item having a new identifier;
- (d2) checking if the candidate cache already comprises a candidate item with the same candidate identifier as the new identifier;
- (d3) if the candidate cache already comprises a candidate item with the same candidate identifier, updating the candidate value of this candidate item based on the data contained in the new web content request;
- (d4) if the candidate cache does not already comprise a candidate item with the same candidate identifier, creating a new candidate item in the candidate cache, the new candidate item having as candidate identifier the new identifier.

Advantageously, each web content request contains at least:
- a timestamp field containing a timestamp indicating when the web content request has been emitted;
- a request field containing a requested web address indicating a web page that is queried;
- a referrer field containing a candidate web address indicating the web page that has issued the web content request;
- an origin field containing a user identifier indicating a machine from which the web content request has been issued.

Advantageously, the new candidate identifier comprises the user identifier and the candidate web address of the new web content request.

Advantageously, the new candidate value comprises:
- the timestamp of the new web content request;
- a children number indicating the number of web content requests having the same candidate web address as the new web content request in their referrer field, the children number being initially set to one.

Advantageously, the step (d3) of updating the candidate value of this candidate item based on a second set of data contained in the new web content request comprises a step of incrementing the children number of the candidate value.

Advantageously, the step of applying the detection test comprises a step of comparing the children number with a children threshold, the detection test having a positive result if the children number is superior to the children threshold.

Advantageously, the new candidate value further comprises an interest flag indicating whether the web address of the referrer in the new web content request has been observed in a past web content request with a requested web address of an interesting type, the interest flag being initially set to zero.

The interest flag may be set to 1 if the web address of the referrer in the new web content request has been observed in a past web content request with a requested web address of an interesting type.

Advantageously, the step (d3) of updating the candidate value of this candidate item based on a second set of data contained in the new web content request comprises the following steps:
- Checking if the requested web address of the new web content request belongs to a group of interesting web addresses;
- if the requested web address of the new web content request belongs to a group of interesting web addresses, setting the interest flag of the candidate value to 1.

Advantageously, the step of applying the detection test comprises a step of checking the interest flag, the detection test having a positive result if the interest flag is equal to 1.

Advantageously, the preliminary test comprises a step of checking if the referrer field of the new web content request is empty or if it contains a candidate web address, the preliminary test having a positive result if the referrer field of the new web content request contains a candidate web address.

Advantageously, the preliminary test further comprises a step of checking if the candidate web address contains a forbidden extension or not, the preliminary test having a positive result if the candidate web address does not contain a forbidden extension.

Advantageously, the new complete item created in step (b) comprises :
- as complete identifier: the user identifier of the new web content request;
- as complete value: a list of tuples comprising each:
   ∘ the timestamp of the new web content request;
   ∘ the requested web address of the new web content request;
   ∘ the referer web address of the new web content request.

Advantageously, the method further comprises a step of removing the complete item of the complete cache having a timestamp superior to a timestamp threshold.

### BRIEF DESCRIPTION OF THE DRAWINGS

Some embodiments of methods in accordance with embodiments of the present invention are now described, by way of example only, and with reference to the accompanying drawings, in which:
- figure 1 schematically represents a stream of web content requests;
- figure 2 schematically represents a candidate cache;
- figure 3 schematically represents a complete cache.

### DESCRIPTION OF EMBODIMENTS

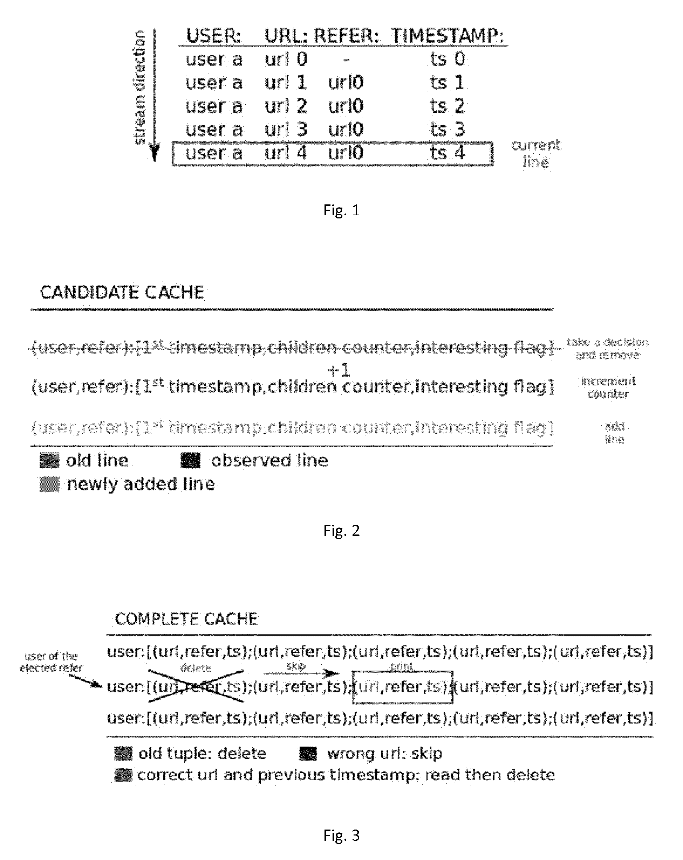

An embodiment of the invention will now be described by reference to figure 1 to 3.

Figure 1 represents a typical stream of web content requests emitted on a network by a web browser in direction of a web server. In this embodiment, each web content request WCR0, WCR1, ... WCR4 contains:
- a timestamp field containing a timestamp "ts0,...ts4" indicating when the web content request has been emitted;
- a request field containing a requested web address "url0,...url4" indicating the web page that is queried;
- a referrer field containing a candidate web address "-, url0" indicating the web page that has issued the web content request; If the request has not been issued from another web page, e.g. directly typing the address on the browser, the referrer field is empty. If the request has been issued from a web page, the referrer field contains the web address of this web page;
- an origin field containing a user identifier "user a", indicating a machine from which the web content request has been issued. For example, the user identifier may contain an anonymized IP address of a machine that has issued the request.

For example, the stream of web content requests may be the following:
0) WCR0:
   - timestamp field=1377433.28
   - request field=www.site.com
   - referrer field= empty
   - user identifier: 227.2.2.2
1) WCR1:
   - timestamp field=1377433.33
   - request field=www.site.com/news/image.png
   - referrer field= www.site.com
   - user identifier= 227.2.2.2.
2) WCR2:
   - timestamp field= 1377433.37
   - request field= www.site.com/news/facebooklikeplugin
   - referrer field= www.site.com
   - user identifier= 227.2.2.2.
3) WCR3:
   - timestamp field=1377433.39
   - request field= www.site.com/news/video.swf
   - referrer field= www.site.com
   - user identifier= 227.2.2.2.
4) WCR4:
   - timestamp field= 1377433.48
   - request field= www.site.com/news/script.js
   - referrer field= www.site.com
   - user identifier= 227.2.2.2.

A method according to an aspect of the invention will now be applied to the above mentioned stream of web content request.

The method uses a first cache named "complete cache" and a second cache named "candidate cache". The complete cache is preferably a hash table. The complete cache comprises items named "complete items". Each complete item comprises an identifier named "complete identifier" and a value named "complete value". An example of complete cache is represented on figure 3. Each complete item corresponds to a web content request of the stream. According to one embodiment, the complete identifier of each item is the user identifier of the web content request corresponding to this item. The complete value of each item is preferably a list comprising:
- the requested web address of the web content request corresponding to this item;
- the timestamp of the web content request corresponding to this item.
- The web address contained in the referrer field

The method also uses a second cache named "candidate cache". The candidate cache is preferably a hash table. The candidate cache comprises items, named "candidate items". Each candidate item comprises an identifier named "candidate identifier" and a value named "candidate value". An example of candidate cache is represented on figure 2. According to one embodiment, the candidate identifier of each item is the couple (user identifier; candidate web address). Intuitively, the candidate cache contains candidate web addresses that have high chances of being elected as intentionally visited, and that need to be observed for a period of time before taking a final decision about them.

The candidate value of each item is preferably a list comprising:
- the timestamp of the first web content request corresponding to this item;
- at least one number enabling to determine if the candidate web address of the web content request is a intentionally requested request or not. For example, this number may be the number of other web content requests that have in their referrer field the candidate web address. The number contains in the candidate value depends on the detection test chosen as it will be explained in detail in the following description.

The method comprises first a step of detecting a new web content request in the stream. This web content request is named "tested web content request". For example, when WCR0 is emitted, the method comprises first a step of detecting WCR0. WCR0 is the tested web content request.

The method comprises then a step of creating a new item in the complete cache, named "new complete item", corresponding to this new web content request. The new complete item comprises:
- as complete identifier the user identifier of the web content request. For example for WCR0, the user identifier is "227.2.2.2";
- as complete value, a tuple comprising:
   o the requested web address of the tested web content request;
   o the referrer web address of the tested web content request;
   o the timestamp of the tested web content request.

For example, for WCR0, the complete value is a tuple comprising (www.site.com; - ; 1377433.28).

The method comprises then a step of applying a preliminary test on the tested web content request in order to determine if the tested web content request contains potentially in its referrer field a web address that has been intentionally requested or not. As a matter of fact, the candidate cache enables to store data relative to the candidate web addresses that are cited in the referrer field of other web content requests in order to determine if these candidate web addresses are intentionally requested or not when there are cited in the request field of a web content request.

According to one embodiment, the step of applying the preliminary test comprises a step of checking if the referrer field of a tested web content request contains a candidate web address or not. If the referrer field of the tested web content request is empty, the preliminary test has a negative result and the method ends here. It is the case for WCR0 since the referrer field of WCR0 is empty.

On the contrary, if the referrer field of a tested web content request is not empty, i.e. if the referrer field of a tested web content request contains a candidate web address, the preliminary test has a positive result. It is for example the case for WCR1 which has a referrer field containing the candidate web address: www.site.com.

According to another embodiment, the preliminary test may further comprise a step of checking if the candidate web address (web address contained in the referrer field) contains a forbidden extension or not. Advantageously, the forbidden extensions are those of a group comprising: .js, .jpg, .jpeg, .png, .js, .css. Other forbidden extension may be defined. If the candidate web address contains one of the forbidden extensions, the preliminary test has a negative result. If the candidate web address contains none of the forbidden extensions, the preliminary test has a positive result.

If the preliminary test has a positive result, the candidate cache is updated.

To that purpose, we create first a new candidate item with at least a second set of data of the tested web content request, the new candidate item having a new candidate identifier. The new candidate identifier comprises the user identifier of the tested web content request and the candidate web address contained in the referrer field of the tested web content request. For example, the new candidate identifier for WCR1 is (227.2.2.2; www.site.com).

The method comprises then a step of checking if the candidate cache already comprises a candidate item with the same candidate identifier as the new candidate item.

If the candidate cache does not already comprise a candidate item having the same candidate identifier as the new candidate item, the method comprises a step of creating a new candidate item in the candidate cache. For example, for WCR1, if the candidate cache does not already comprise a candidate item having as candidate identifier (227.2.2.2; www.site.com), the method comprises a step of creating a new candidate item in the candidate cache. The new candidate item has as candidate identifier the new candidate identifier, i.e. for WCR1 (227.2.2.2; www.site.com). Besides, the new candidate item has as candidate value:
- the first timestamp at which the candidate web address has been observed, e.g. here 1377433.33;
- a number, named "children number". The children number indicates how many times the candidate web address of the referrer field of the tested web content request appeared in the referrer field of other web content requests. Initially, the children number is set to one. This number is incremented each time the candidate web address in the referrer field is observed in a new web content request.

The candidate value may also comprise other data enabling to determine if the candidate web address satisfies other properties, like for example how interesting, at large, is a given intentionally visited web address. In this case, the candidate value may also comprise an interest flag (e.g. 0 or 1). The interest flag indicates whether a candidate web address appeared (in the recent past) in the referrer field of web content requests of an "interesting type". A web content request is considered as being of an "interesting type" if this web content request has as requested web address one of the well known social plugins (e.g. Facebook like or share buttons). So each time that a tested web content request has in its referrer field the candidate web address and in its requested field a requested web address corresponding to a social network, the interest flag of the candidate item corresponding to the candidate web address is set to one. Meaning that the candidate web address is interesting. The rationale behind this test is that a page that embeds social network data is meant to be shared, which means that it is likely to be interesting. For example, in the present case, the interest flag for the candidate value created for WCR1 is initially set to zero since the requested web address in the requested field of WCR1 is www.site.com, which is not the address of a social network. Consequently, the new candidate value for WCR1 is (the timestamp of WCR1, the children number of the candidate web address of WCR1; the interest flag of the candidate web address of WCR1), i.e. (1377433.33, 1, 0).

If the candidate cache already comprises a candidate item having the same candidate identifier as the new candidate item, the candidate value of the candidate item having the same candidate identifier as the new candidate item is updated according to the data contained in the tested web content request. For example, when the tested web content request will be WCR2, the new candidate identifier of WCR2 is (227.2.2.2; www.site.com). The candidate cache already comprises a candidate item having the same candidate identifier since it is the candidate identifier of the candidate item created after the emission of WCR1. The method will then comprise a step of updating the candidate value of this candidate item according to the data contained in WCR2. This step of updating the candidate value is a step of incrementing the children number of the candidate value since WCR2 contains in its referrer field the same candidate web address as WCR1: this candidate web address is then cited two times in the referrer field of a web content request. Besides, we also check if the requested web address of WCR2 is an interesting web address or not. The requested web address of WCR2 is www.site.com/enws/facebooklikeplugin which is an address corresponding to a social network. Consequently, the interest flag of the candidate item having as candidate identifier (227.2.2.2; www.site.com) will be set to one. Consequently, at the end of the updating step, the candidate value of the candidate item having as candidate identifier (227.2.2.2; www.site.com) is (1377433.33, 2, 1).

The method comprises then a step of checking if the candidate cache has candidate items older than a time threshold. This step is performed each time that the step of updating to candidate cache is performed, i.e. each time that a web content request of the stream is detected and that this web content request contains in its referrer field a candidate web address. In others words, this step is performed each time that a web content request is detected in the stream and that its referrer field is not empty.

The step of checking if the candidate cache comprises candidate items older than a time threshold is a step of comparing the timestamp of each candidate item with the current timestamp. If the difference between the timestamp of a candidate item and the current timestamp is superior to the time threshold, a detection test will be applied on this candidate item. Otherwise, nothing is performed on this candidate item.

The step of applying the detection test on a candidate item is preferably a step of comparing the children number of this candidate item with a children threshold. If the children number of this candidate item is superior to the children threshold, the detection test has a positive result. Otherwise, the detection test has a negative result. The step of applying the detection test may also comprise a step of checking the interest flag of the candidate item. In that case, the detection test of interest has a positive result if the children number is 1 and interest flagnegative otherwise.

The method comprises then a step of suppressing the candidate items on which the detection test has been performed.

The candidate items on which the detection test is applied and that give a positive result are named "elected candidate items".

The method comprises then a step of retrieving from the complete cache data relative to the elected candidate items. More precisely, the method comprises preferably a step of retrieving the data contained in the complete value containing the candidate web address of the elected candidate item. For example, if we suppose that the elected candidate value is the candidate value having as candidate identifier (227.2.2.2; www.site.com) and as candidate value (1377433.33, 2, 1), we will retrieve from the complete cache the data contained in the complete value that contains www.site.com. This complete value is (www.site.com; - ; 1377433.28).

As a matter of fact, when a candidate web address is elected, we still need to identify its correct timestamp since the timestamp associated with this candidate web address in the candidate cache is not its correct timestamp but the timestamp of the requested web address of the web content request that has this candidate web address in its referrer field. The complete cache enables to retrieve the correct timestamp of a web address. The complete cache enables as well to retrieve the previous page from which the intentionally visited request was issued (which is useful for web analytics purposes).

The method enables then to detect that among a stream of web content requests, www.site.com was intentionally requested and that this web address was first requested at the time 1377433.28. The method also enables to know that this web address has been directly typed by the user since the referrer field of the complete value is empty. If the referrer field of the complete value had contained a web address, we would have known what was the page that the user has consulted before visiting the web page www.site.com.

The method comprises then a step of deleting old complete items from the complete cache.

To that purpose, the method may comprise a step of comparing the timestamp of the complete items with a reference timestamp and a step of deleting all the complete items for which the difference between the timestamp of the complete item and the reference item is superior to a given threshold.

Each time that the method comprises a step of retrieving data from the complete cache relative to an elected candidate item, the method may also further comprise a step of deleting all complete items that have a timestamp older to the timestamp of the retrieved complete item.

The cleaning of the complete cache has therefore two components, one that is event driven and another that is time-driven. These steps enable to keep the complete cache as small as possible.

While the present invention has been particularly described with reference to the preferred embodiments, it should be readily apparent to those of ordinary skill in the art that changes and modifications in form and details may be made without departing from the scope of the invention. For example, other data could be stored in the candidate value of the items of the candidate cache. The data stored in the candidate values depends on the detection test applied to determine if a candidate web address is intentionally requested or not. Consequently, we could also apply other detection test to determine if a candidate web address is intentionally requested or not. We could also store other data in the complete value of the complete items, depending on the data in which we are interested on.

## Claims

1. Method of online detection of intentionally requested web addresses in a stream of web content requests, each web content request containing a request field containing a requested web address and a referrer field, the method using a first cache named "complete cache" and a second cache named "candidate cache", the complete cache comprising complete items, each complete item comprising a complete identifier and a complete value, the candidate cache comprising candidate items, each candidate item comprising a candidate identifier and a candidate value, the method comprising the following steps:
- (a) detecting a new web content request in the stream;
- (b) creating a new complete item in the complete cache with a first set of data of the new web content request;
- (c) applying a preliminary test on the web content request,
- if the preliminary test has a positive result:
o (d) updating the candidate cache according to the data contained in the web content request;
o (e) checking if the candidate cache has candidate items older than a time threshold;
o (f) applying a detection test on the candidate items older than the time threshold, the detection test having a positive result if the candidate item is elected as intentionally requested;
o (g) retrieving from the complete cache data relative to the elected candidate items.

2. Method according to claim 1, further comprising a step of suppressing the candidate items once the detection test has been applied on them.

3. Method according to any of the previous claims, wherein the step (d) of updating the candidate cache comprises the following steps:
- (d1) creating a new item with at least a second set of data of the new web content request, the new item having a new identifier;
- (d2) checking if the candidate cache already comprises a candidate item with the same candidate identifier as the new identifier;
- (d3) if the candidate cache already comprises a candidate item with the same candidate identifier, updating the candidate value of this candidate item based on the data contained in the new web content request;
- (d4) if the candidate cache does not already comprise a candidate item with the same candidate identifier, creating a new candidate item in the candidate cache, the new candidate item having as candidate identifier the new identifier.

4. Method according to any of the previous claims, wherein each web content request contains at least:
- a timestamp field containing a timestamp indicating when the web content request has been emitted;
- a request field containing a requested web address indicating a web page that is queried;
- a referrer field containing a candidate web address indicating the web page that has issued the web content request;
- an origin field containing a user identifier indicating a machine from which the web content request has been issued.

5. Method according to claim 3 and claim 4, wherein the new candidate identifier comprises the user identifier and the candidate web address of the new web content request.

6. Method according to claim 5, wherein the new candidate value comprises:
- the timestamp of the new web content request;
- a children number indicating the number of web content requests having the same candidate web adress as the new web content request in their referrer field, the children number being initially set to one.

7. Method according to the previous claim, wherein the step (d3) of updating the candidate value of this candidate item based on a second set of data contained in the new web content request comprises a step of incrementing the children number of the candidate value.

8. Method according to claims 6 or 7, wherein the step of applying the detection test comprises a step of comparing the children number with a children threshold, the detection test having a positive result if the children number is superior to the children threshold.

9. Method according to any of claims 6 to 8, wherein the new candidate value further comprises an interest flag indicating whether a web content request of an interesting type having the same candidate web address in its referrer field as the new web content request, has been observed in the past, the interest flag being initially set to zero.

10. Method according to the previous claim, wherein the step (d3) of updating the candidate value of this candidate item based on a second set of data contained in the new web content request comprises the following steps:
- Checking if the requested web address of the new web content request belongs to a group of interesting web addresses;
- if the requested web address of the new web content request belongs to a group of interesting web addresses,setting the interest flag of the candidate value to one.

11. Method according to the previous claim, wherein the step of applying the detection test comprises a step of checking the value of the interest flag, the detection test having a positive result if the value of the interest flag is one.

12. Method according to any of claims 4 to 11, wherein the preliminary test comprises a step of checking if the referrer field of the new web content request is empty or if it contains a candidate web address, the preliminary test having a positive result if the referrer field of the new web content request contains a candidate web address.

13. Method according to the previous claim, wherein the preliminary test further comprises a step of checking if the candidate web address contains a forbidden extension or not, the preliminary test having a positive result if the candidate web address does not contain a forbidden extension.

14. Method according to any of claims 4 to 13, wherein the new complete item created in step (b) comprises :
- as complete identifier: the user identifier of the new web content request;
- as complete value: a list comprising:
o the timestamp of the new web content request;
o the requested web address of the new web content request;
o the candidate web address of the new web content request.

15. Method according to the previous claim, further comprising a step of removing the complete item of the complete cache having a timestamp superior to a timestamp threshold.

## Patentansprüche

1. Verfahren zur Online-Detektion von absichtlich angefragten Webadressen in einem Stream von Web-Content-Anfragen, wobei jede Web-Content-Anfrage ein Anfragefeld enthält, das eine angefragte Webadresse und ein Referrer-Feld enthält, wobei das Verfahren einen ersten Cache, bezeichnet als "kompletter Cache" und einen zweiten Cache, bezeichnet, als "Bewerber-Cache" verwendet, wobei der komplette Cache komplette Objekte umfasst, wobei jedes komplette Objekt eine komplette Kennung und einen kompletten Wert umfasst, wobei der Bewerber-Cache Bewerberobjekte umfasst, wobei jedes Bewerberobjekt eine Bewerberkennung und einen Bewerberwert umfasst, wobei das Verfahren die folgenden Schritte umfasst:
- (a) Detektieren einer neuen Web-Content-Anfrage in dem Stream;
- (b) Erstellen eines neuen kompletten Objekts in dem kompletten Cache mit einem ersten Datensatz der neuen Web-Content-Anfrage;
- (c) Anwenden einer Vorprüfung auf die Web-Content-Anfrage;
- wenn die Vorprüfung ein positives Ergebnis hat:
o (d) Aktualisieren des Bewerber-Caches gemäß den in der Web-Content-Anfrage enthaltenen Daten;
o (e) Prüfen, ob der Bewerber-Cache Bewerberobjekte hat, die älter als ein zeitlicher Schwellenwert sind;
o (f) Anwenden eines Detektionstests auf die Bewerberobjekte, die älter sind als der zeitliche Schwellenwert, wobei der Detektionstest ein positives Ergebnis hat, wenn das Bewerberobjekt als absichtlich angefragt ausgewählt ist;
o (g) Abrufen von Daten über die ausgewählten Bewerberobjekte aus dem kompletten Cache.

2. Verfahren gemäß Anspruch 1, weiterhin umfassend einen Schritt zum Löschen der Bewerberobjekte, sobald der Detektionstest darauf angewendet wurde.

3. Verfahren gemäß irgendeinem der voranstehenden Ansprüche, bei dem der Schritt (d) zum Aktualisieren des Bewerberobjekts die folgenden Schritte umfasst:
- (d1) Erstellen eines neuen Objekts mit wenigstens einem zweiten Datensatz der neuen Web-Content-Anfrage, wobei das neue Objekt eine neue Kennung hat;
- (d2) Prüfen, ob der Bewerber-Cache bereits ein Bewerberobjekt mit derselben Bewerberkennung hat wie die neue Kennung;
- (d3) wenn das Bewerberobjekt bereits ein Bewerberobjekt mit derselben Bewerberkennung umfasst, Aktualisieren des Bewerber-Wertes dieses Bewerberobjekts basierend auf den in der neuen Web-Content-Anfrage enthaltenen Daten;
- (d4) wenn der Bewerber-Cache nicht bereits ein Bewerberobjekt mit derselben Bewerberkennung umfasst, Erstellen eines neuen Bewerberobjekts in dem Bewerber-Cache, wobei das neue Bewerberobjekt als neue Bewerberkennung die neue Kennung hat.

4. Verfahren gemäß irgendeinem der voranstehenden Ansprüche, bei dem jede Web-Content-Anfrage wenigstens umfasst:
- ein Zeitstempelfeld, das einen Zeitstempel enthält, der anzeigt, wann die Web-Content-Anfrage ausgegeben wurde;
- ein Anfragefeld, das eine angefragte Webadresse enthält, die eine Webseite angibt, die angefragt wird;
- ein Referrer-Feld, das eine Bewerber-Webadresse enthält, die die Webseite angibt, die die Web-Content-Anfrage ausgegeben hat;
- ein Ursprungsfeld, das eine Benutzerkennung hat, die eine Maschine angibt, von der die Web-Content-Anfrage ausgegeben wurde.

5. Verfahren gemäß Anspruch 3 und Anspruch 4, bei dem die neue Bewerberkennung die Benutzerkennung und die Bewerber-Webadresse der neuen Web-Content-Anfrage umfasst.

6. Verfahren gemäß Anspruch 5, bei dem der neue Bewerberwert umfasst:
- den Zeitstempel der neuen Web-Content-Anfrage;
- eine Kindernummer, die die Nummer der Web-Content-Anfragen angibt, die dieselbe Bewerber-Webadresse wie die neue Web-Content-Anfrage in ihrem Referrer-Feld haben, wobei die Kindernummer ursprünglich auf eins gesetzt ist.

7. Verfahren gemäß dem voranstehenden Anspruch, bei dem der Schritt (d3) der Aktualisierung des Bewerberwertes dieses Bewerberobjekts basierend auf einem zweiten Datensatz, der in der neuen Web-Content-Anfrage enthalten ist, einen Inkrementierungsschritt der Kindernummer des Bewerberwertes umfasst.

8. Verfahren gemäß Anspruch 6 oder 7, bei dem der Schritt der Anwendung der Vorprüfung einen Vergleichsschritt der Kindernummer mit einem Kinderschwellenwert umfasst, wobei die Vorprüfung ein positives Ergebnis hat, wenn die Kindernummer größer ist als der Kinderschwellenwert.

9. Verfahren gemäß irgendeinem der Ansprüche 6 bis 8, bei dem der neue Bewerberwert weiterhin einen Interessenmerker umfasst, der angibt, ob eine Web-Content-Anfrage eines interessanten Typs mit derselben Bewerber-Webadresse in ihrem Referrer-Feld wie die neue Web-Content-Anfrage in der Vergangenheit festgestellt wurde, wobei der Interessenmerker ursprünglich auf null gesetzt ist.

10. Verfahren gemäß dem voranstehenden Anspruch, bei dem der Schritt (d3) der Aktualisierung des Bewerberwertes dieses Bewerberobjekts basierend auf einem zweiten Datensatz, der in der neuen Web-Content-Anfrage enthalten ist, die folgenden Schritte umfasst:
- Prüfen, ob die angefragte Webadresse der neuen Web-Content-Anfrage zu einer Gruppe von interessanten Webadressen gehört;
- wenn die angefragte Webadresse der neuen Web-Content-Anfrage zu einer Gruppe von interessanten Webadressen gehört, Einstellen des Interessenmerkers des Bewerberwertes auf eins.

11. Verfahren gemäß dem voranstehenden Anspruch, bei dem der Anwendungsschritt der Vorprüfung einen Prüfungsschritt des Wertes des Interessenmerkers umfasst, wobei die Vorprüfung ein positives Ergebnis hat, wenn der Wert des Interessenmerkers eins ist.

12. Verfahren gemäß irgendeinem der Ansprüche 4 bis 11, bei dem die Vorprüfung einen Prüfungsschritt umfasst, ob das Referrer-Feld der neuen Web-Content-Anfrage leer ist oder ob es eine Bewerber-Webadresse enthält, wobei die Vorprüfung ein positives Ergebnis hat, wenn das Referrer-Feld der neuen Web-Content-Anfrage eine Bewerber-Webadresse enthält.

13. Verfahren gemäß dem voranstehenden Anspruch, bei dem die Vorprüfung weiterhin einen Prüfungsschritt umfasst, ob die Bewerber-Webadresse eine verbotene Erweiterung umfasst oder nicht, wobei die Vorprüfung ein positives Ergebnis hat, wenn die Bewerber-Webadresse keine verbotene Erweiterung umfasst.

14. Verfahren gemäß irgendeinem der Ansprüche 4 bis 13, bei dem das neue komplette Objekt, das in Schritt (b) erstellt wurde, umfasst:
- als komplette Kennung: die Benutzerkennung der neuen Web-Content-Anfrage;
- als kompletten Wert: eine Liste, umfassend:
∘ den Zeitstempel der neuen Web-Content-Anfrage;
∘ die angefragte Webadresse der neuen Web-Content-Anfrage;
o die Bewerber-Webadresse der neuen Web-Content-Anfrage.

15. Verfahren gemäß dem voranstehenden Anspruch, weiterhin umfassend einen Schritt zum Entfernen des kompletten Objekts des kompletten Caches mit einem höheren Zeitstempel als einem Zeitstempel-Schwellenwert.

## Revendications

1. Procédé de détection en ligne d'adresses web intentionnellement demandées dans un flux de demandes de contenu web, chaque demande de contenu web contenant un champ demande contenant une adresse web demandée et un champ référent, le procédé utilisant un premier cache appelé « cache complet » et un deuxième cache appelé « cache candidat », le cache complet comprenant des éléments complets, chaque élément complet comprenant un identifiant complet et une valeur complète, le cache candidat comprenant des éléments candidats, chaque élément candidat comprenant un identifiant candidat et une valeur candidate, le procédé comprenant les étapes suivantes :
- (a) la détection d'une nouvelle demande de contenu web dans le flux ;
- (b) la création d'un nouvel élément complet dans le cache complet avec un premier ensemble de données de la nouvelle demande de contenu web ;
- (c) l'application d'un test préliminaire sur la demande de contenu web,
- si le test préliminaire a un résultat positif :
o (d) la mise à jour du cache candidat en fonction des données contenues dans la demande de contenu web ;
o (e) le fait de vérifier si le cache candidat a des éléments candidats plus anciens qu'un seuil de temps ;
o (f) l'application d'un test de détection sur les éléments candidats plus anciens que le seuil de temps, le test de détection ayant un résultat positif si l'élément candidat est élu comme étant intentionnellement demandé ;
o (g) l'extraction, du cache complet, de données relatives aux éléments candidats élus.

2. Procédé selon la revendication 1, comprenant en outre une étape de suppression des éléments candidats une fois que le test de détection leur a été appliqué.

3. Procédé selon l'une quelconque des revendications précédentes, dans lequel l'étape (d) de mise à jour du cache candidat comprend les étapes suivantes :
- (d1) la création d'un nouvel élément avec au moins un deuxième ensemble de données de la nouvelle demande de contenu web, le nouvel élément ayant un nouvel identifiant ;
- (d2) le fait de vérifier si le cache candidat comprend déjà un élément candidat avec le même identifiant candidat que le nouvel identifiant ;
- (d3) si le cache candidat comprend déjà un élément candidat avec le même identifiant candidat, la mise à jour de la valeur candidate de cet élément candidat sur la base des données contenues dans la nouvelle demande de contenu web ;
- (d4) si le cache candidat ne comprend pas déjà un élément candidat avec le même identifiant candidat, la création d'un nouvel élément candidat dans le cache candidat, le nouvel élément candidat ayant comme identifiant candidat le nouvel identifiant.

4. Procédé selon l'une quelconque des revendications précédentes, dans lequel chaque demande de contenu web contient au moins :
- un champ estampille temporelle contenant une estampille temporelle indiquant le moment où la demande de contenu web a été émise ;
- un champ demande contenant une adresse web demandée indiquant une page web qui est interrogée ;
- un champ référent contenant une adresse web candidate indiquant la page web qui a émis la demande de contenu web ;
- un champ origine contenant un identifiant utilisateur indiquant une machine de laquelle a été émise la demande de contenu web.

5. Procédé selon la revendication 3 et la revendication 4, dans lequel le nouvel identifiant candidat comprend l'identifiant utilisateur et l'adresse web candidate de la nouvelle demande de contenu web.

6. Procédé selon la revendication 5, dans lequel la nouvelle valeur candidate comprend :
- l'estampille temporelle de la nouvelle demande de contenu web ;
- un nombre d'enfants indiquant le nombre de demandes de contenu web ayant la même adresse web candidate que la nouvelle demande de contenu web dans le champ référent, le nombre d'enfants étant initialement fixé à un.

7. Procédé selon la revendication précédente, dans lequel l'étape (d3) de mise à jour de la valeur candidate de cet élément candidat sur la base d'un deuxième ensemble de données contenues dans la nouvelle demande de contenu web comprend une étape d'incrémentation du nombre d'enfants de la valeur candidate.

8. Procédé selon la revendication 6 ou 7, dans lequel l'étape d'application du test de détection comprend une étape de comparaison du nombre d'enfants à un seuil d'enfants, le test de détection ayant un résultat positif si le nombre d'enfants est supérieur au seuil d'enfants.

9. Procédé selon l'une quelconque des revendications 6 à 8, dans lequel la nouvelle valeur candidate comprend en outre un indicateur d'intérêt indiquant si une demande de contenu web d'un type intéressant ayant la même adresse web candidate dans son champ référent que la nouvelle demande de contenu web, a été observée par le passé, l'indicateur d'intérêt étant initialement fixé à zéro.

10. Procédé selon la revendication précédente, dans lequel l'étape (d3) de mise à jour de la valeur candidate de cet élément candidat sur la base d'un deuxième ensemble de données contenues dans la nouvelle demande de contenu web comprend les étapes suivantes :
- le fait de vérifier si l'adresse web demandée de la nouvelle demande de contenu web appartient à un groupe d'adresses web intéressantes ;
- si l'adresse web demandée de la nouvelle demande de contenu web appartient à un groupe d'adresses web intéressantes, le fait de fixer l'indicateur d'intérêt de la valeur candidate à un.

11. Procédé selon la revendication précédente, dans lequel l'étape d'application du test de détection comprend une étape de vérification de la valeur de l'indicateur d'intérêt, le test de détection ayant un résultat positif si la valeur de l'indicateur d'intérêt est de un.

12. Procédé selon l'une quelconque des revendications 4 à 11, dans lequel le test préliminaire comprend une étape consistant à vérifier si le champ référent de la nouvelle demande de contenu web est vide ou s'il contient une adresse web candidate, le test préliminaire ayant un résultat positif si le champ référent de la nouvelle demande de contenu web contient une adresse web candidate.

13. Procédé selon la revendication précédente, dans lequel le test préliminaire comprend en outre une étape consistant à vérifier si l'adresse web candidate contient une extension interdite ou non, le test préliminaire ayant un résultat positif si l'adresse web candidate ne contient pas d'extension interdite.

14. Procédé selon l'une quelconque des revendications 4 à 13, dans lequel l'élément complet créé à l'étape (b) comprend :
- comme identifiant complet : l'identifiant utilisateur de la nouvelle demande de contenu web ;
- comme valeur complète : une liste comprenant :
o l'estampille temporelle de la nouvelle demande de contenu web ;
o l'adresse web demandée de la nouvelle demande de contenu web ;
o l'adresse web candidate de la nouvelle demande de contenu web.

15. Procédé selon la revendication précédente, comprenant en outre une étape de retrait de l'élément complet du cache complet ayant une estampille temporelle supérieure à un seuil d'estampille temporelle.
